(19) Europäisches Patentamt
European Patent Office
Office européen des brevets

(11) Veröffentlichungsnummer : **0 029 958**
**B1**

(12) # EUROPÄISCHE PATENTSCHRIFT

(45) Veröffentlichungstag der Patentschrift : **14.09.83**

(51) Int. Cl.[3] : **C 09 B 62/405**, C 09 B 67/26, D 06 P 1/384, D 21 H 3/80

(21) Anmeldenummer : **80107190.3**

(22) Anmeldetag : **19.11.80**

(54) **Flüssigkristalline Phase eines Azoreaktivfarbstoffes und deren Verwendung zum Färben und Bedrucken von natürlichen und synthetischen Substraten.**

(30) Priorität : **30.11.79 DE 2948293**

(43) Veröffentlichungstag der Anmeldung : **10.06.81 Patentblatt 81/23**

(45) Bekanntmachung des Hinweises auf die Patenterteilung : **14.09.83 Patentblatt 83/37**

(84) Benannte Vertragsstaaten : **CH DE FR GB IT LI**

(56) Entgegenhaltungen :
**DE B 1 191 059**
**FR A 2 124 359**

(73) Patentinhaber : **BAYER AG**
**Zentralbereich Patente, Marken und Lizenzen**
**D-5090 Leverkusen 1, Bayerwerk (DE)**

(72) Erfinder : **Koll, Jochen, Ing. grad.**
**Am Telegraf 40**
**D-5068 Odenthal 3 (DE)**
Erfinder : **Paulat, Volker, Dr.**
**Menzelweg 1**
**D-4019 Monheim (DE)**
Erfinder : **Hörnle, Reinhold, Dr.**
**Hufelandstrasse 42**
**D-5000 Köln (DE)**
Erfinder : **Mölls, Hans-Heinz, Dr.**
**Max-Beckmann-Strasse 29**
**D-5090 Leverkusen (DE)**
Erfinder : **Nonn, Konrad, Dr.**
**Otto Stange Strasse 17**
**D-5090 Leverkusen (DE)**

**EP 0 029 958 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Flüssigkristalline Phase eines Azoreaktivfarbstoffes und deren Verwendung zum Färben und Bedrucken von natürlichen und synthetischen Substraten

Gegenstand der Erfindung ist die lyotrope flüssigkristalline wäßrige Phase des in Wasser bei Raumtemperatur in einer Konzentration von 23-35 % vorliegenden Farbstoffs der Formel

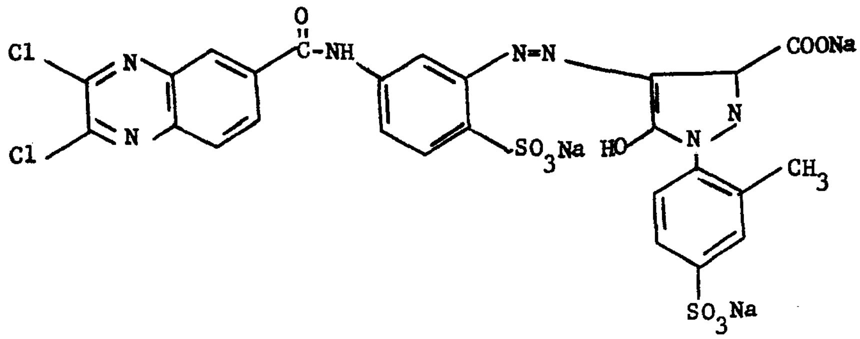

sowie die Verwendung dieser lyotropen flüssigen Kristalle zur Herstellung von Färbebädern und Druckpasten für das Färben und/oder Bedrucken von natürlichen und synthetischen Substraten insbesondere Baumwolle, Wolle, Regeneratcellulose, Papier und Leder. Diese Phase zeigt die für flüssige Kristalle charakteristische Doppelbrechung und Bildung eines strukturierten Beugungsbildes bei der Röntgenkleinwinkelbeugung. Die Charakterisierung dieser lyotropen flüssigen Kristalle erfolgt, wie üblich, durch die infolge der Doppelbrechung sich ausbildenden Interferenzfarben beim Einbringen dieser flüssigen Kristalle zwischen gekreuzte Nicols eines Polarisationsmikroskopes und/oder durch das strukturierte Beugungsbild bei der Röntgenkleinwinkelbeugung mit Cu-K α-Strahlung in einer Kießig-Kammer (vgl. z. B. G. H. Brown ; Flüssige Kristalle, Chem. uns. Zeit 2, 1968, S. 43-51 und Eckert and Kramer ; Pharmazie uns. Zeit 1, 1972, S. 116-121).

Die flüssigkristalline Phase bleibt auch bei Zusatz geringer Mengen anorganischer Salze, insbesondere Natriumchlorid, Natriumsulfat, Natriumacetat oder üblichen Puffergemischen und/oder wassermischbarer organischer Lösungsmittel wie Alkohole, Polyole, deren Ether oder Ester, Amide und/oder hydrotroper Substanzen wie Harnstoff erhalten.

Die erfindungsgemäße physikalische Form des Farbstoffes wird erhalten, wenn der nahezu salzfreie Farbstoff der Formel I mit Wasser innerhalb des obengenannten Konzentrationsbereiches verflüssigt wird.

Man kann aber auch direkt zu der neuen physikalischen Form gelangen, wenn man die bei der üblichen Synthese anfallende stark salzhaltige wäßrige Lösung bzw. Mischung der Druckpermeation unterwirft.

Die erfindungsgemäße neue physikalische Form des Farbstoffs stellt eine außergewöhnliche lager- und hydrolysestabile Flüssigformierung dar.

## Beispiel

28 g des ganz oder nahezu salzfreien Farbstoffes der Formel I werden mit 72 g Wasser im Verlaufe von mehreren Stunden bei Raumtemperatur unter Rühren verflüssigt. Man erhält eine hochkonzentrierte, lyotrope flüssigkristalline Phase, die lagerstabil und hydrolysebeständig ist und welche charakteristische Interferenzfarben beim Einbringen zwischen gekreuzte Nicols im Polarisationsmikroskop zeigt. Sie kann z. B. direkt dem Färbebad zum Färben von Cellulosefasern nach dem Ausziehverfahren zugesetzt werden. Man erhält eine brillante gelbe Färbung.

**Ansprüche**

1. Lyotrope flüssigkristalline Phase des in Wasser bei Raumtemperatur in einer Konzentration von 23-35 % vorliegenden Farbstoffes der Formel

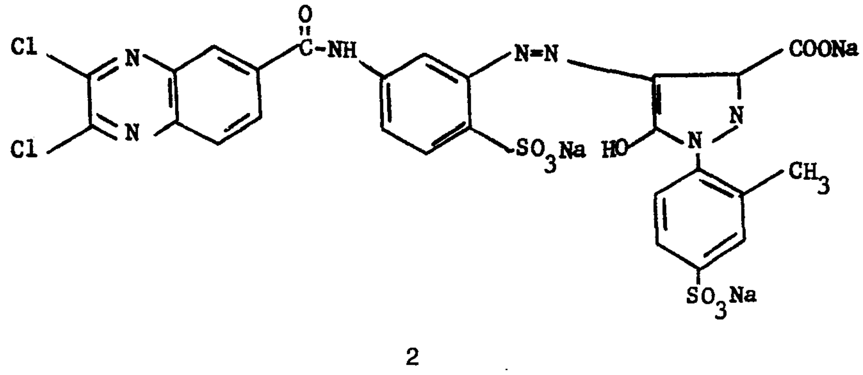

2. Verwendung der lyotropen flüssigkristallinen Phase des Farbstoffes des Anspruchs 1 zur Herstellung von Färbebädern und Druckpasten für das Färben und/oder Bedrucken von natürlichen und synthetischen Substraten insbesondere Baumwolle, Wolle, Regeneratcellulose, Papier und Leder.

**Claims**

1. Lyotropic liquid crystal phase of the dyestuff of the formula

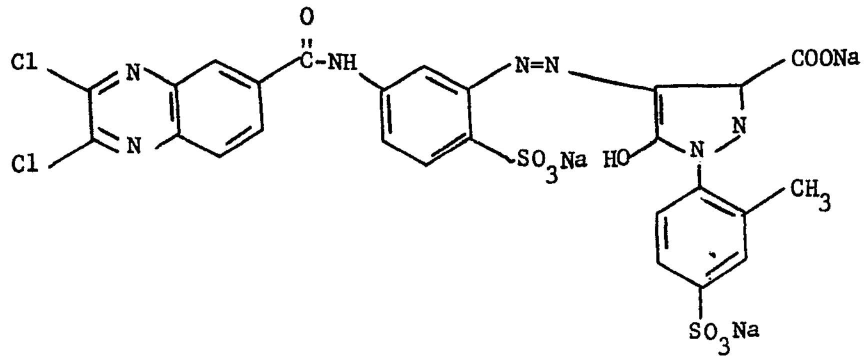

which is present in water in a concentration of 23-35 % at room temperature.

2. Use of the lyotropic liquid crystal phase of the dyestuff of Claim 1 for the preparation of dyebaths and printing pastes for dyeing and/or printing natural and synthetic substrates, in particular cotton, wool, regenerated cellulose, paper and leather.

**Revendications**

1. Phase mésomorphe lyotrope du colorant de formule

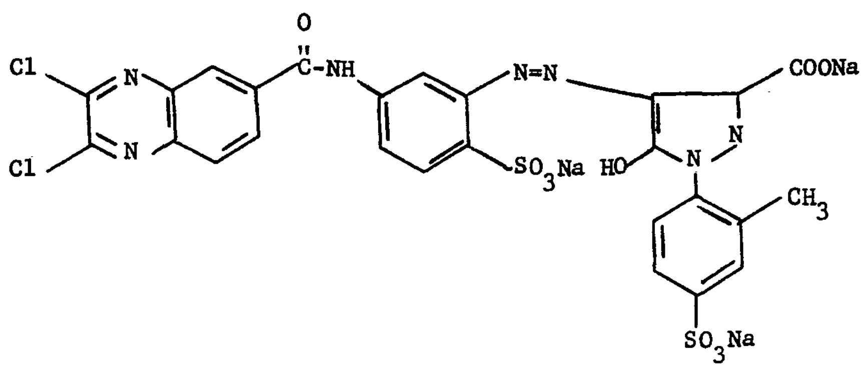

présent dans l'eau à une concentration de 23-35 % à la température ambiante.

2. Utilisation de la phase mésomorphe lyotrope du colorant selon la revendication 1 pour la fabrication de bains de teinture et de pâtes d'impression pour la teinture et/ou l'impression de substrats naturels et synthétiques, en particulier coton, laine, cellulose régénérée, papier et cuir.